# EUROPÄISCHE PATENTANMELDUNG

(11) **EP 2 181 891 A2**
(43) Veröffentlichungstag der Anmeldung: **05.05.2010**
(21) Anmeldenummer: 09174097.7
(22) Anmeldetag: 27.10.2009
(51) Int. Cl.: B60Q 1/12

(54) **Verfahren und Vorrichtung zum Einstellen von Kurvenlichtscheinwerfern, insbesondere bei der Durchfahrt von Kreuzungen oder Einmündungen**

(30) Priorität: 30.10.2008 DE 102008054005
(71) Anmelder: Hella KGaA Hueck & Co., 59552 Lippstadt (DE)
(72) Erfinder: Kubitza, Boris, 59519, Möhnesee-Körbecke (DE); Himmler, Andreas, 33102, Paderborn (DE)

(57) **Zusammenfassung**

Die vorliegende Erfindung betrifft ein Verfahren und eine Vorrichtung zum Einstellen des Schwenkwinkels von Kurvenlichtscheinwerfern bei der Durchfahrt von Kreuzungen oder Einmündungen, wobei zunächst eine Vorrausschaudistanz festgelegt wird. Während eines Annäherns an oder während einer Einfahrt in die Kreuzung oder Einmündung wird die Vorausschaudistanz auf die Entfernung des Kraftfahrzeugs zur Kreuzung oder Einmündung begrenzt. Während einer Ausfahrt aus oder während eines Entfernens von der Kreuzung oder Einmündung wird die Vorausschaudistanz bis zu einem vorgegebenen Wert begrenzt. Der Straßenverlauf wird anhand einer digitalen Straßenkarte und/oder anhand von Informationen eines Kamerasystems ermittelt. Der in der Vorausschaudistanz in der Fahrbahnmitte liegenden Punkt wird einerseits anhand der Position des Fahrzeugs und andererseits anhand des vor dem Fahrzeug liegenden Straßenverlauf ermittelt. Als Schwenkwinkel wird der Winkel zwischen einer Fahrzeuglängsachse und einer Geraden vom Fahrzeug zu dem in der Vorausschaudistanz in der Fahrbahnmitte liegenden Punkt berechnet und der Schwenkwinkel wird an den Kurvenlichtscheinwerfern eingestellt.

## Beschreibung

Die Erfindung betrifft ein Verfahren und eine Vorrichtung zum Einstellen des Schwenkwinkels von Kurvenlichtscheinwerfern, insbesondere bei der Durchfahrt von Kreuzungen oder Einmündungen.

Aus der Druckschrift mit der Veröffentlichungsnummer DE 103 00 771 A1 ist ein Verfahren zum Einstellen von Scheinwerfern bekannt, bei dem das Annähern des Fahrzeugs an eine Kreuzung oder einer Einmündung mit Hilfe eines Navigationsgerätes und eines GPS-Empfängers erfasst wird. Das Navigationsgerät umfasst digitale Karten, in denen Informationen über die Lage von Kreuzungen und Einmündungen entlang des Fahrweges festgehalten sind. Alternativ oder zusätzlich kann mittels eines Kamerasystems das Annähern an eine Kreuzung oder eine Einmündung erfasst werden. Nach dem in der Druckschrift beschriebenen Verfahren werden bei der Annäherung an eine auf dem Fahrweg liegenden Kreuzung oder Einmündung die Scheinwerfer so angesteuert, dass der Kreuzungs- oder Einmündungsbereich weiträumig ausgeleuchtet wird. Aus der Druckschrift ist es ferner bekannt, den Übergang zwischen dem Zustand der Scheinwerfer vor der Kreuzung bzw. Einmündung und den Zustand der Scheinwerfer im Bereich der Kreuzung oder der Einmündung kontinuierlich zu gestalten. Auf diese Weise wird es vermieden, dass der Kraftfahrzeugführer und gegebenenfalls andere Verkehrsteilnehmer durch eine plötzliche Änderung der Ausleuchtung irritiert werden. In der Druckschrift wird vorgeschlagen, dass einzelne Lampen stufenlos gedimmt werden können.

Die in der Druckschrift DE 103 00 771 A1 beschriebene technische Lehre beschreibt ein Verfahren zum Einstellen der Scheinwerfer bei der Annäherung an eine Kreuzung oder Einmündung ohne dass die Besonderheiten von Kurvenlichtscheinwerfern berücksichtigt werden. Bei Kurvenlichtscheinwerfern, insbesondere bei sogenannten prädiktiven oder vorausschauenden Kurvenlichtscheinwerfern werden die Scheinwerfer jedoch in Abhängigkeit vom Straßenverlauf geschwenkt. Dadurch ist eine bessere Ausleuchtung der vor dem Fahrzeug liegende Straße bzw. Fahrbahn möglich. Zugleich wird eine unnötige Blendung des Gegenverkehrs vermieden. Beim prädiktiven bzw. vorausschauenden Kurvenlicht wird der Schwenkwinkel für die Scheinwerfer in Abhängigkeit des Straßenverlaufs vor dem Fahrzeug berechnet. Dabei kann der Straßenverlauf vor dem Fahrzeug aus digitalen Karten in Kombination mit einem GPS-Empfänger oder mit einem Kamerasystem ermittelt werden. Auch die Kombination aus beiden Ansätzen ist möglich.

An Kreuzungen oder Einmündungen kann der Schwenkwinkel nicht eindeutig bestimmt werden, weil nicht fehlerfrei vorhergesagt werden kann, welche der von der Kreuzung oder Einmündung weiterführenden Straßen von dem Kraftfahrzeugführer gewählt werden wird. Allein schon deshalb ist es sinnvoll an Kreuzungen und Einmündungen dass prädiktive oder vorrausschauende Licht zu deaktivieren. Die Scheinwerfer nehmen dann eine neutrale Stellung ein. Dieses kann insbesondere die Stellung für eine Geradeausfahrt sein.

Hier setzt die vorliegende Erfindung an.

Der vorliegenden Erfindung liegt die Aufgabe zugrunde ein Verfahren und eine Vorrichtung vorzuschlagen, mit welcher das prädiktive bzw. vorausschauende Kurvenlicht vor bzw. nach Kreuzungen oder Einmündungen deaktiviert bzw. aktiviert werden kann.

Diese Aufgabe wird durch das erfindungsgemäße Verfahren zum Einstellen des Schwenkwinkels von Kurvenlichtscheinwerfern bei der Durchfahrt von Kreuzungen oder Einmündungen gelöst. Demnach wird zunächst eine sogenannte Vorausschaudistanz festgelegt. Die Vorausschaudistanz ist die Distanz, die der Fahrzeugführer des Kraftfahrzeuges überblicken sollte. Die Vorausschaudistanz kann abhängig von der Geschwindigkeit, vom Straßenverlauf und/oder der gewählten Lichtverteilung sein. Die Vorausschaudistanz kann ferner davon abhängen, ob dem Fahrzeugführer andere Fahrzeuge entgegenkommen oder vorausfahren. Schließlich kann die Vorausschaudistanz auch von der Witterung, insbesondere von Niederschlägen, oder von der Helligkeit der Umgebung abhängen. Sofern beispielsweise eine Abblendlichtverteilung gewählt wird, entspricht die Vorausschaudistanz optimalerweise der Referenzleuchtweite der Scheinwerfer. Diese beträgt bei korrekter Einstellung des Abblendlichts 65 m.

Während des Annäherns an oder während einer Einfahrt in die Kreuzung oder Einmündung wird die Vorausschaudistanz auf die Entfernung des Kraftfahrzeugs zur Kreuzung oder zur Einmündung begrenzt. Erfindungsgemäß wird ferner bei einer Ausfahrt aus oder während eines Entfernens von der Kreuzung oder Einmündung die Vorausschaudistanz erhöht, dabei aber bis auf einen vorgegebenen Wert begrenzt. Dieser Wert liegt dabei unter der Vorausschaudistanz, die bei einem gleichen Streckenverlauf gewählt worden wäre, wenn auf der Strecke keine Kreuzungen oder Einmündungen liegen.

Der Straßenverlauf oder Streckenverlauf wird anhand einer digitalen Straßenkarte, zum Beispiel aus einem Navigationssystem, und/oder anhand von Informationen eines Kamerasystem ermittelt. Sind die Vorausschaudistanz und der Straßenverlauf bekannt, kann der in der Vorausschaudistanz vor dem Fahrzeug in der Fahrbahnmitte liegende Punkt anhand der Position des Fahrzeugs und anhand des vor dem Fahrzeug liegenden Straßenverlaufs ermittelt werden. Zum Festlegen des Schwenkwinkels wird dann zwischen der Fahrzeuglängsachse und einer Geraden von dem Fahrzeug zu dem in der Vorausschaudistanz in der Fahrbahnmitte liegenden Punkt berechnet. Der berechnete Schwenkwinkel wird anschließend an den Kurvenlichtscheinwerfern eingestellt. Die Vorausschaudistanz wird bei der Fahrt im Kreuzungsbereich reduziert und ist insbesondere kleiner als die Referenzleuchtweite. Dieses hat zur Folge, dass der Schwenkwinkel kleiner ist als der Winkel der für eine Ausleuchtung der Straße notwendig wäre, wenn im Straßenverlauf keine Kreuzungen oder Einmündungen lägen. Die kleinere Vorausschaudistanz hat aber ferner zur Folge, dass die Abhängigkeit des Kurvenlichts vom Straßenverlauf vor dem Fahrzeug abnimmt. Ist beispielsweise in einem Grenzfall die Vorausschaudistanz auf Null reduziert, sind die Kurvenlichtscheinwerfer nicht geschwenkt.
Es sei an dieser Stelle darauf hingewiesen, dass es sich bei der Vorausschaudistanz nicht um die Leuchtweite handelt, auf welche die Scheinwerfer eingestellt sind. Die Leuchtweite oder eine Leuchtweitenregulierung stehen mit der Vorausschaudistanz im Sinne der vorliegenden Anmeldung in keinem unmittelbaren Zusammenhang. Die Vorausschaudistanz ist lediglich eine Hilfsgröße, die erfindungsgemäß dazu verwendet wird, um den Schwenkwinkel der Scheinwerfer zu bestimmen.

Die abnehmende Abhängigkeit des Schwenkwinkels von dem vorausliegenden Straßenverlauf wird für die Annäherung an die Kreuzungen bzw. an Einmündungen ausgenutzt. Die Vorausschaudistanz wird mit zunehmender Distanz zur vorausliegenden Kreuzung reduziert. Das hat zur Folge, dass bei der Annäherung an eine Kreuzung bzw. Einmündung der Schwenkwinkel unabhängig vom weiteren Straßenverlauf kontinuierlich reduziert wird und ein Übergang vom prädiktiven Kurvenlicht zum nicht geschwenkten Licht erfolgt. Der beschriebene Übergang vom vorausschauenden Licht auf eine Lichtverteilung für die Geradeausfahrt könnte auch dazu genutzt werden, um zwischen dem vorausschauenden bzw. prädiktiven Kurvenlicht zu einem auf Fahrzeugsignalen, z. B. Geschwindigkeits-, Lenkwinkel-, Gierratensignalen, basierenden dynamischen Kurvenlichts umzuschalten.

Nach dem Durchfahren der Kreuzung bzw. der Einmündung wird die Vorausschaudistanz kontinuierlich erhöht, wobei sie begrenzt bleibt. Sie kann beispielsweise so lange erhöht werden, bis sie der Referenzleuchtweite der Scheinwerfer bzw. der den Scheinwerfern zugeordneten Lichtverteilung erreicht ist. Für die Erhöhung der Vorausschaudistanz nach dem Durchfahren der Kreuzung bzw. der Einmündung sind verschiedene Regeln denkbar. So ist es beispielsweise möglich, dass die Vorausschaudistanz in der Abhängigkeit von der Entfernung zur Kreuzung oder zur Einmündung erhöht wird. Je größer die Entfernung zur Kreuzung oder Einmündung ist, um so größer ist auch die Vorausschaudistanz. So ist es beispielsweise möglich, dass während der Ausfahrt aus oder während des Entfernens von der Kreuzung oder Einmündung die Vorausschaudistanz der Entfernung zur Kreuzung oder Einmündung entspricht. Als Entfernung zur Kreuzung oder Einmündung kann der Abstand vom Fahrzeug zur Kreuzungs- oder Einmündungsmitte oder zu einem Punkt am Ausgang der Kreuzung oder Einmündung festgelegt werden.
Alternativ ist es möglich, dass die Vorausschaudistanz in Abhängigkeit von der Zeit erhöht wird, die vergangen ist, seitdem die Kreuzung oder die Einmündung durchfahren wurde. Die Vorausschaudistanz kann beispielsweise proportional zur Funktion 1-*e*^{-(*t*/τ)} erhöht werden. Der Buchstabe t bezeichnet dabei die seit dem Durchfahren der Kreuzung bzw. Einmündung vergangene Zeit und τ ein Parameter, der Werte zwischen 0 und 10, vorzugsweise 1 oder 2 annehmen kann. Außerdem ist es erfindungsgemäß möglich, dass die Vorausschaudistanz nach dem Durchfahren der Kreuzung oder Einmündung gleich der Referenzleuchtweite gesetzt wird. Der sich darauf ergebende und durch das Berechnungsmittel berechnete Schwenkwinkel kann mittels eines Filters gefiltert werden. Mittels dieses Filters kann ein verzögertes Ansteigen des Schwenkwinkels erreicht werden. Dieser gefilterte Schwenkwinkel kann dann an den Kurvenlichtscheinwerfern eingestellt werden. Das verwendete Filter kann beispielsweise die Charakteristik eines PT1-Gliedes haben.

Bei einem erfindungsgemäßen Verfahren kann in den Fällen, in denen sich das Fahrzeug während der Ausfahrt aus oder des Entfernens von der Kreuzung oder der Einmündung einer weiteren Kreuzung oder Einmündung nähert oder in eine weitere Kreuzung oder Einmündung einfährt, die Vorausschaudistanz auf die Entfernung des Fahrzeugs zur weiteren Kreuzung oder Einmündung begrenzt bleiben. Damit wird ein kontinuierlicher Übergang eingestellten Schwenkwinkels bei der Fahrt zwischen zwei Kreuzungen oder Einmündungen erreicht.

Die der Erfindung zugrunde liegende Aufgabe wird ferner durch eine Vorrichtung zum Einstellen des Schwenkwinkels von Kurvenlichtscheinwerfern, insbesondere bei der Durchfahrt von Kreuzungen oder Einmündungen gelöst. Eine derartige Vorrichtung weist eine Schnittstelle zu einem vorzugsweise satellitengestützten System zur Bestimmung der Position des Fahrzeugs, zum Beispiel zum GPS. Die Schnittstelle ist zum Einlesen von Positionsdaten des Fahrzeugs geeignet und eingerichtet. Die Vorrichtung hat ferner eine Schnittstelle zu einer digitalen Straßenkarte, zum Beispiel einem Navigationssystem, über die der Straßenverlauf in die Vorrichtung einlesbar ist und/oder eine Schnittstelle zum Einlesen von Informationen eines Kamerasystems über den Straßenverlauf.
Eine erfindungsgemäße Vorrichtung weist außerdem ein Berechnungsmittel auf. Dieses Berechnungsmittel ist geeignet und eingerichtet, den vom Fahrzeug aus in der Vorausschaudistanz der Fahrbahnmitte liegenden Punkt einerseits anhand der Position des Fahrzeugs und andererseits anhand des vor dem Fahrzeug liegenden Straßenverlaufs zu ermitteln. Das Berechnungsmittel ist dabei geeignet und eingerichtet, bei der Ermittlung des in der Vorausschaudistanz in der Mitte der Fahrbahn liegenden Punkts durch das Berechnungsmittel die Vorausschaudistanz während eines Annäherns an oder während einer Einfahrt in die Kreuzung oder Einmündung auf die Entfernung des Kraftfahrzeugs zur Kreuzung oder Einmündung zu begrenzen und während einer Ausfahrt aus oder während eines Entfernens von der Kreuzung oder Einmündung auf einen vorgegebenen Wert zu begrenzen. Schließlich ist das Berechnungsmittel zum Ermitteln des Schwenkwinkels aus der Fahrzeuglängsrichtung und der Richtung der Geraden vom Fahrzeug zum in der Vorausschaudistanz in der Mitte der Fahrbahn liegenden Punkts geeignet und eingerichtet.

Zusätzlich kann das Berechnungsmittel geeignet sein, beim Durchfahren von Kurven mit einem Radius von kleiner als 130 m und/oder beim Durchfahren von S-Kurven die Vorausschaudistanz auf einen Wert kleiner als die Referenzleuchtweite der Fahrzeugscheinwerfer zu reduzieren. Damit ist eine bessere Ausleuchtung der Fahrbahn möglich. Ebenso kann das Berechnungsmittel geeignet und eingerichtet sein, beim Verwenden von digitalen Karten geringer Genauigkeit und/oder hohem Alter die Vorausschaudistanz auf einen Wert kleiner als die Referenzleuchtweite zu reduzieren. Damit werden die Scheinwerfer beim Durchfahren von Kurven weniger stark geschwenkt. Fehler aufgrund der geringeren Genauigkeit oder dem Alter der digitalen Karten werden dadurch minimiert.

Anhand der beigefügten Zeichnungen wird die Erfindung nachfolgend näher erläutert. Dabei zeigt:
- Fig. 1: eine Darstellung von Schwenkwinkel, Referenzleuchtweite und Vorausschaudistanz bei einer Kurvenfahrt mit Abblendlicht,
- Fig. 2: die Annäherung eines Fahrzeugs an eine Einmündung in einem Kurvenbereich,
- Fig. 3: die Situation gemäß Figur 2, jedoch kurz vor der Einfahrt des Fahrzeugs in den Einmündungsbereich,
- Fig. 4: die Situation gemäß der Figuren 2 und 3 bei der Durchfahrt des Einmündungsbereichs und
- Fig. 5: die Situation gemäß der Figuren 2 bis 4 beim Entfernen des Fahrzeugs vom Einmündungsbereich.

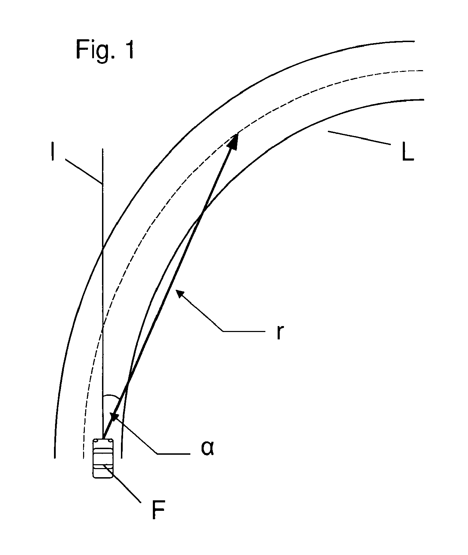

Die in der Figur 1 gezeigte Draufsicht auf die Kurvenfahrt eines Fahrzeugs F zeugt die Fahrzeuglängsrichtung I und den Schwenkwinkel α. Um den Schwenkwinkel α sind die Kurvenlichtscheinwerfer gegenüber der Fahrzeuglängsrichtung I geschwenkt. Zum Einstellen des Schwenkwinkels α bzw. zum Ermitteln des Schwenkwinkels α, um den die Kurvenlichtscheinwerfer geschwenkt werden, wird bei einem Straßenverlauf ohne Einmündungen oder Kreuzungen folgendermaßen vorgegangen:

Zunächst wird eine sogenannte Vorausschaudistanz bestimmt. Die Vorausschaudistanz kann im Grunde genommen willkürlich festgelegt werden. Um eine optimale Ausleuchtung der Straße bei einer Kurvenfahrt oder einer Geradeausfahrt zu erhalten, wird die Vorausschaudistanz jedoch sinnvollerweise auf die sogenannte Referenzleuchtweite der Scheinwerfer bzw. gewählten Lichtverteilung der Scheinwerfer eingestellt. Bei Abblendlicht entspricht die Referenzleuchtweite 65 m. Die Referenzleuchtweite bezeichnet beim Abblendlicht den Ort des sogenannten Zwickels.

Ist die Vorausschaudistanz festgelegt, wird vom Fahrzeug aus der Punkt in der Vorausschaudistanz bestimmt, der auf der Fahrbahnmitte des zu durchfahrenden Straßenverlaufs liegt. Ist dieser Punkt festgestellt, wird die Richtung r des Punkts vom Fahrzeug aus ermittelt. Der Winkel zwischen dieser ermittelten Richtung des Punktes auf der Fahrbahnmitte zur Fahrzeuglängsachse ist der gesuchte Schwenkwinkel α, um welchen die Kurvenlichtscheinwerfer beim Durchfahren geschwenkt werden.

Der Schwenkwinkel α hängt also unmittelbar von der Richtung des in der Vorausschaudistanz auf der Fahrbahnmitte liegenden Punkts ab. Aus der Figur 1 ist leicht ersichtlich, dass bei einer Reduzierung der Vorausschaudistanz der Winkel zwischen dem Pfeil r und der Fahrzeuglängsrichtung I abnähme. Bei kleineren Vorausschaudistanzen gelangt man daher zu kleineren Schwenkwinkeln α.

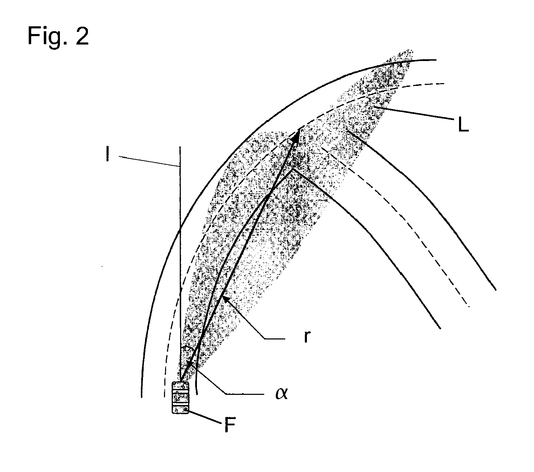

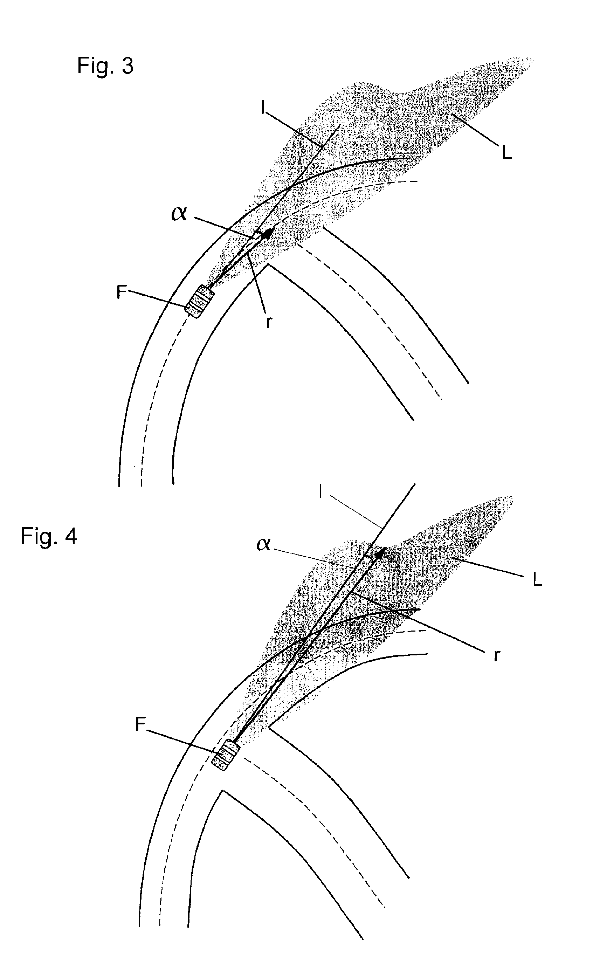

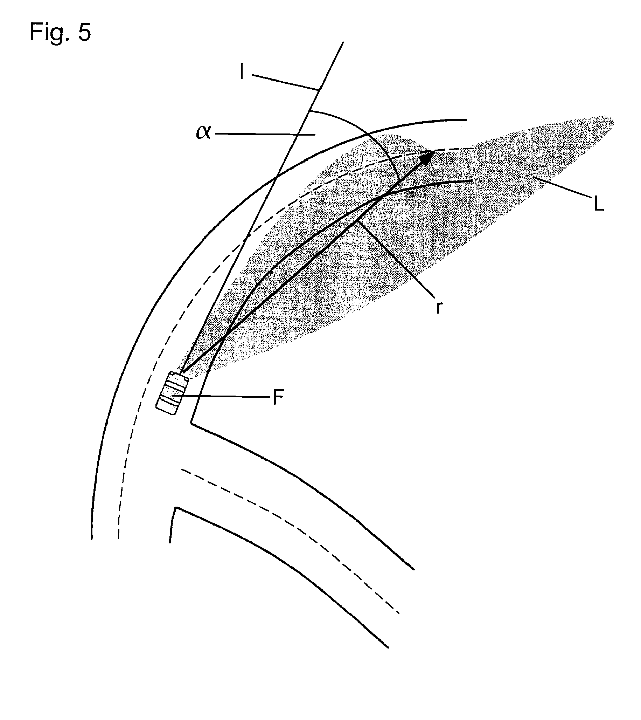

Diese Eigenschaft macht sich die Erfindung zunutze, wie aus den Figuren 2 bis 5 hervorgeht. Bei der Einfahrt in den in einer Kurve liegenden Einmündungsbereich wird, wie man aus dem Vergleich der Figuren 2, 3 und 4 erkennen kann, der Schwenkwinkel α stetig kleiner. Beim Verlassen des Einmündungsbereichs, wie er in der Figur 5 dargestellt ist, nimmt der Schwenkwinkel α dagegen erneut zu. Hat das Fahrzeug genau die Einmündungsmitte erreicht, wird die Vorausschaudistanz zu Null gesetzt. Damit wird auch der Schwenkwinkel α zu Null.

### Bezugszeichenliste

- α: Schwenkwinkel
- I: Fahrzeuglängsrichtung
- F: Fahrzeug
- r: Richtung des Punkts in Vorausschaudistanz vor dem Fahrzeug in der Fahrbahnmitte

## Patentansprüche

1. Verfahren zum Einstellen des Schwenkwinkels von Kurvenlichtscheinwerfern bei der Durchfahrt von Kreuzungen oder Einmündungen, wobei
- zunächst eine Vorrausschaudistanz festgelegt wird,
- während eines Annäherns an oder während einer Einfahrt in die Kreuzung oder Einmündung die Vorausschaudistanz auf die Entfernung des Kraftfahrzeugs zur Kreuzung oder Einmündung begrenzt wird,
- während einer Ausfahrt aus oder während eines Entfernens von der Kreuzung oder Einmündung die Vorausschaudistanz bis zu einem vorgegebenen Wert begrenzt wird,
- der Straßenverlauf anhand einer digitalen Straßenkarte und/oder anhand von Informationen eines Kamerasystems ermittelt wird,
- ein in der Vorausschaudistanz in der Fahrbahnmitte liegenden Punkt einerseits anhand der Position des Fahrzeugs und andererseits anhand des vor dem Fahrzeug liegenden Straßenverlauf ermittelt wird,
- als Schwenkwinkel (α) der Winkel zwischen einer Fahrzeuglängsachse (I) und einer Geraden (r) vom Fahrzeug zu dem in der Vorausschaudistanz in der Fahrbahnmitte liegenden Punkt berechnet wird und
- der Schwenkwinkel (α) an den Kurvenlichtscheinwerfern eingestellt wird.

2. Verfahren nach Anspruch 1, **dadurch gekennzeichnet, dass** die Vorausschaudistanz auf den Wert einer Referenzleuchtweite der Kurvenlichtscheinwerfer erhöht wird.

3. Verfahren nach Anspruch 1 oder 2, **dadurch gekennzeichnet, dass** die Vorausschaudistanz in Abhängigkeit von der Entfernung zur Kreuzung oder Einmündung erhöht wird.

4. Verfahren nach Anspruch 3, **dadurch gekennzeichnet, dass** während der Ausfahrt aus oder während des Entfernens von der Kreuzung oder Einmündung die Vorausschaudistanz der Entfernung zur Kreuzung oder Einmündung entspricht.

5. Verfahren nach Anspruch 4, **dadurch gekennzeichnet, dass** als Entfernung zur Kreuzung oder Einmündung der Abstand vom Fahrzeug zur Kreuzungsoder Einmündungsmitte oder einem Punkt am Ausgang der Kreuzung oder Einmündung verwendet wird.

6. Verfahren nach Anspruch 1 oder 2, **dadurch gekennzeichnet, dass** die Vorausschaudistanz in Abhängigkeit von der Zeit erhöht wird, die vergangen ist, seit dem die Kreuzung oder Einmündung durchfahren wurde.

7. Verfahren nach Anspruch 6, **dadurch gekennzeichnet, dass** die Vorausschaudistanz in Abhängigkeit von der Zeit erhöht wird, die vergangen ist, seit dem die Mitte der Kreuzung oder Einmündung passiert wurde.

8. Verfahren nach Anspruch 6 oder 7, **dadurch gekennzeichnet, dass** die Vorausschaudistanz proportional zur Funktion 1-*e*^{-(*t*/τ)} erhöht wird, wobei t die vergangene Zeit und τ ein Parameter mit Werten zwischen 0 und 2, zum Beispiel gleich 1 oder gleich 2 ist.

9. Verfahren nach Anspruch 2, **dadurch gekennzeichnet, dass** die Vorausschaudistanz nach dem Durchfahren der Kreuzung oder Einmündung gleich der Referenzleuchtweite gesetzt wird und der daraus durch das Berechnungsmittel berechnete Schwenkwinkel mittels eines Filters gefiltert wird und der gefilterte Schwenkwinkel (α) durch die Kurvenlichtscheinwerfer eingestellt wird.

10. Verfahren nach einem der Ansprüche 1 bis 10, **dadurch gekennzeichnet, dass** in den Fällen, in denen sich das Fahrzeug während der Ausfahrt aus oder des Entfernens von der Kreuzung oder der Einmündung einer weiteren Kreuzung oder Einmündung nähert oder in eine weitere Kreuzung oder Einmündung einfährt, die Vorausschaudistanz auf die Entfernung des Fahrzeugs zur weiteren Kreuzung oder Einmündung begrenzt bleibt.

11. Vorrichtung zum Einstellen des Schwenkwinkels von Kurvenlichtscheinwerfern, insbesondere bei der Durchfahrt von Kreuzungen oder Einmündungen, wobei der Schwenkwinkel (α) der Winkel zwischen einer Fahrzeuglängsachse (I) und einer Geraden (r) vom Fahrzeug zu einem in einer Vorausschaudistanz in der Fahrbahnmitte liegenden Punkt ist und die Vorrichtung folgende Merkmale aufweist:
- die Vorrichtung hat eine Schnittstelle zu einem vorzugsweise satellitengestützten System zur Bestimmung der Position des Fahrzeugs, die zum Einlesen von Daten zur Position des Fahrzeugs geeignet und eingerichtet ist,
- die Vorrichtung hat eine Schnittstelle zu einer digitalen Straßenkarte über die der Straßenverlauf in die Vorrichtung einlesbar ist und/oder eine Schnittstelle zum Einlesen von Informationen eines Kamerasystems über den Straßenverlauf in die Vorrichtung,
- die Vorrichtung weist ein Berechnungsmittel auf, das geeignet und eingerichtet ist, den in der Vorausschaudistanz in der Fahrbahnmitte liegenden Punkt einerseits anhand der Position des Fahrzeugs und andererseits anhand des vor dem Fahrzeug liegenden Straßenverlauf zu ermitteln, wobei das Berechnungsmittel geeignet und eingerichtet ist bei der Ermittlung des in der Vorausschaudistanz in der Mitte der Fahrbahn liegenden Punkts durch das Berechnungsmittel die Vorausschaudistanz
- während eines Annäherns an oder während einer Einfahrt in die Kreuzung oder Einmündung auf die Entfernung des Fahrzeugs zur Kreuzung oder Einmündung zu begrenzen,
- während einer Ausfahrt aus oder während eines Entfernens von der Kreuzung oder Einmündung wird auf einen vorgegebenen Wert zu begrenzen,
- das Berechnungsmittel ist zum Ermitteln des Schwenkwinkels (α) aus der Fahrzeuglängsrichtung (I) und der Richtung der Geraden (r) vom Fahrzeug zum in der Vorausschaudistanz in der Fahrbahnmitte liegenden Punkt geeignet und eingerichtet.

12. Vorrichtung nach Anspruch 11, **dadurch gekennzeichnet, dass** das Berechnungsmittel ferner geeignet und eingerichtet ist beim Durchfahren von Kurven mit einem Radius von kleiner als 130 m und/oder beim Durchfahren von S-Kurven die Vorrausschaudistanz auf einen Wert kleiner als die Referenzleuchtweite zu reduzieren.

13. Vorrichtung nach Anspruch 11, **dadurch gekennzeichnet, dass** das Berechnungsmittel ferner geeignet und eingerichtet ist beim Verwenden von digitalen Karten geringer Genauigkeit und/oder hohem Alter die Vorrausschaudistanz auf einen Wert kleiner als die Referenzleuchtweite zu reduzieren.
